Europäisches Patentamt

European Patent Office

Office européen des brevets

(11) Publication number: **0 026 615**
**B1**

(12) **EUROPEAN PATENT SPECIFICATION**

(45) Date of publication of patent specification: **07.03.84**   (51) Int. Cl.³: **B 64 C 31/06, B 64 D 17/00**

(21) Application number: **80303277.0**

(22) Date of filing: **17.09.80**

(54) Parachute.

(30) Priority: **21.09.79 GB 7932854**

(43) Date of publication of application:
**08.04.81 Bulletin 81/14**

(45) Publication of the grant of the patent:
**07.03.84 Bulletin 84/10**

(84) Designated Contracting States:
**DE SE**

(56) References cited:
**DE - A - 442 109**
**US - A - 2 648 508**
**US - A - 2 943 829**
**US - A - 3 960 346**
**US - A - 4 029 273**

(73) Proprietor: **WALLOP INDUSTRIES LTD**
**Middle Wallop**
**Stockbridge Hampshire, SO20 8DX (GB)**

(72) Inventor: **Scott, Andrew Macdonald**
**Holmfield Rollestone Road**
**Shrewton Wiltshire (GB)**

(74) Representative: **Smith, Martin Stanley et al,**
**Stevens, Hewlett & Perkins 5, Quality Court**
**Chancery Lane**
**London WC2A 1HZ (GB)**

Courier Press, Leamington Spa, England.

Parachute

The invention relates to a parachute of a kind intended to fly tethered in the manner of a kite. Tethered parachutes which are flown in the wind or towed behind a moving vessel have applications in position marking, supporting various airborne equipment, or target practice, for example.

A practical difficulty with tethered parachutes is that they are found to be unstable and unless precautions are taken they will readily plunge to the ground. A suitable precaution is to attach a tail after the manner of a stabilising kite tail. One such arrangement is shown in US—A—2 648 508. A difficulty with this, however, is that the parachute may be deployed by launching a canister by rocket or explosive charge, the parachute being unfolded from the canister when aloft. A tail easily becomes entangled in the rigging with this arrangement and stabilisation is lost. The invention seeks to provide an improved parachute.

According to the invention there is provided a parachute of a kind intended to fly tethered, having a canopy and which is provided with balance weight means, characterised in that the balance weight means is distributed around a portion of the periphery of the canopy by being sewn into a hem thereof.

The distributed weight may be achieved by lead weights sewn into the hem at the periphery of the canopy.

The proportion of the periphery which is weighted may be up to half — namely 180° of arc. Preferably, however, the weighted portion is between 30° and 90° of arc and in a preferred embodiment is substantially 60° of arc.

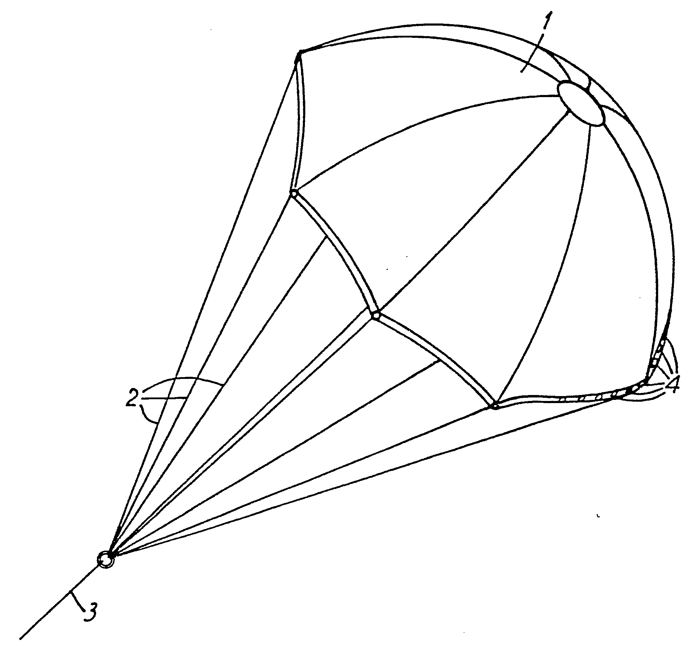

The invention will further be described with reference to the accompanying drawing, of which the sole figure is a perspective view of a parachute is accordance with the invention.

Referring to the drawing there is shown a parachute having a fabric canopy 1, a number of rigging lines 2 and a tethering line 3. The parachute is flown tethered with the remote end of line 3 attached to a point at ground level which may be fixed or on a moving vehicle.

The canopy is symmetrical and the periphery is circular. Over 60° of arc of the periphery there is distributed a series of lead weights 4 which are sewn into the hem of the canopy. The weights are evenly distributed. In flight, the weighted portion will assume the lowest position.

In this example the diameter of the parachute is 5 m and the total distributed weight of the lead weights is 1½ kg.

## Claims

1. A parachute of a kind intended to fly tethered, having a canopy (1) and which is provided with balance weight means (4), characterised in that the balance weight means (4) is distributed around a portion of the periphery of the canopy (1) by being sewn into a hem thereof.

2. A parachute as claimed in claim 1 further characterised in that the weighted portion of the periphery has an extent of between 30° and 90° of arc.

3. A parachute as claimed in claim 1 or claim 2 wherein the distributed weight consists of evenly distributed weights (4).

## Revendications

1. Un parachute d'un genre destiné à être attaché, ayant une coupole (1) et qui est muni de moyens de compenser le poids (4), caractérisé par le fait que ces moyens de compenser le poids (4) sont répartis autour d'une partie de la périphérie de la coupole (1) étant cousus dans un ourlet qui en fait partie.

2. Parachute défini comme ayant la caractéristique 1 caractérisé aussi par le fait que la portion lestée de la périphérie s'étend sur un arc entre 30° et 90°.

3. Parachute défini comme ayant la caractéristique 1 ou la caractéristique 2, le poids distribué consistant en poids distribués uniformément (4).

## Patentansprüche

1. Fallschirm für Fesselflug mit einer Kappe (1), welcher mit Ausgleichsgewichtseinrichtungen (4) versehen ist, dadurch gekennzeichnet, daß die Ausgleichsgewichtseinrichtungen um einen Teil des Umfangs der Kappe (1) herum verteilt sind, indem diese in einen Saum der Kappe genäht sind.

2. Fallschirm, wie in Anspruch 1 beansprucht, weiter dadurch gekennzeichnet, daß der belastete Teil des Umfangs eine Ausdehnung zwischen 30 und 90 Winkelgraden hat.

3. Fallschirm, wie in Anspruch 1 oder 2 beansprucht, bei dem das verteilte Gewicht aus gleichmäßig verteilten Gewichten (4) besteht.